# EUROPEAN PATENT SPECIFICATION

(11) **EP 3 582 631 B1**
(45) Date of publication and mention of the grant of the patent: **22.11.2023**
(21) Application number: 18704242.9
(22) Date of filing: 12.02.2018
(51) Int. Cl.: A23L 27/00, A23L 9/00, A23C 9/154, A23L 2/39, A23L 29/20, A23L 2/395, A23L 23/10, A23L 29/212, A23L 29/231, A23L 29/256, A23L 29/269, A23L 29/281, A23P 30/20, A23C 1/00, A23F 3/30, A23F 5/36, A23F 5/40, A23L 33/00, A23L 29/00, A23L 33/115

(54) **METHOD OF PREPARING A DRIED HYDROGEL CO-GEL**
VERFAHREN ZUR HERSTELLUNG EINES GETROCKNETEN HYDROGEL-CO-GELS
PROCEDE DE PREPARATION D'UN CO-GEL HYDROGEL DÉSHYDRATÉ

(30) Priority: 14.02.2017 EP 17155974
(43) Date of publication of application: 25.12.2019
(73) Proprietor: Société des Produits Nestlé S.A., 1800 Vevey (CH)
(72) Inventor: WOOSTER, Timothy, James, 1066 Epalinges (CH); ACQUISTAPACE, Simone, 1814 La Tour-de-Peilz (CH); POLLIEN, Philippe, René, 1072 Forel (CH); FELLAY, Thierry, 1329 Bretonnières (CH)
(74) Representative: Slaven, John William
(86) International application number: PCT/EP2018/053382
(87) International publication number: WO 2018/149770

(56) References cited:
- EP-A1- 2 415 357
- EP-A2- 1 123 660
- EP-A2- 1 846 153
- EP-B1- 1 846 153
- US-B1- 7 488 503
- García Tasende Manuel ET AL: "Carrageenan Properties And Applications: A Review" In: "Carrageenans: Sources and Extraction Methods, Molecular Structure, Bioactive Properties and Health Effects", 1 September 2016 (2016-09-01), Nova Science Publishers, Inc., US, XP055796941, ISBN: 978-1-63485-503-7 pages 17-49, Retrieved from the Internet: URL:https://ebookcentral.proquest.com/lib/ epo-ebooks/reader.action?docID=4698098&ppg =17>
- S.-S. Choi ET AL: "Physicochemical and Sensory Characteristics of Fish Gelatin", Journal of Food Science, vol. 65, no. 2, 1 March 2000 (2000-03-01), pages 194-199, XP055060120, ISSN: 0022-1147, DOI: 10.1111/j.1365-2621.2000.tb15978.x

## Description

### Field of the Invention

The present invention relates to a method of making a food grade powder providing controlled release of an aroma, as defined in the appended claims.

### Background of the Invention

Controlling the release of aromas is an important tool in creating food products which are appreciated by consumers. For example, when drinking a cup of coffee or a hot soup, the aroma above the cup is an important aspect of the enjoyment of the product. The strength of this aroma is a function of the amount of aroma and its phase partitioning. Over time, phase partitioning of the aroma from the beverage to the air decreases the strength of aroma coming from the cup and the last sip of the beverage is not as aromatic as the first. The decrease in above cup aroma after beverage preparation can be a key driver in the decrease in appeal. Hence, there is interest to create food products such as beverages that have good and persistent aroma to enhance consumer appeal.

Currently there are a number of aroma encapsulation technologies that are used in aroma delivery, the main drawback of these is that they are largely based on spray dried powder technology, for example with a carrier such as maltodextrin. The challenge with this technology is that spray drying of aromas leads to a porous powder structure which has limited ability to control the release of aroma during storage and reconstitution, and the process can lead to the loss of many desirable volatile materials or "top notes".

Melt encapsulation of aroma or flavour is a known technique in which a carbohydrate melt is prepared and the flavour to be encapsulated added. The solution is then quenched at elevated temperatures using, for example, isopropyl alcohol, producing a solid carbohydrate product containing flavour. Such techniques are disclosed in U.S. Pat. No. 4,610,890 and U.S. Pat. No. 4,707,367. Considerable thermal degradation of the encapsulants take place in this process which can lead to undesirable changes in the flavour profile. EP1123660 relates to the encapsulation of flavouring agents in a glassy matrix, which is for use in food preparations for providing sustained release of the encapsulated flavouring agents.

Hence, there is a persisting need in the industry to find better solutions for the encapsulation of aromas, limiting degradation and losses during processing and storage technology and providing controlled release, for example upon rehydration. As used in this specification, the words "comprises", "comprising", and similar words, are not to be interpreted in an exclusive or exhaustive sense. In other words, they are intended to mean "including, but not limited to".

An object of the present invention is to improve the state of the art and to provide an improved solution to overcome at least some of the inconveniences described above, or at least to provide a useful alternative. The object of the present invention is achieved by the subject matter of the independent claim. The dependent claims further develop the idea of the present invention.

### Summary of the invention

Accordingly, the present invention provides a method of making a food grade powder providing controlled release of an aroma, the method comprising; heating a solution comprising a first biopolymer capable of forming a thermoreversible elastic gel upon cooling to 25 °C or above, a second biopolymer capable of forming a glassy matrix upon drying, and the aroma, wherein the first biopolymer is kappa carrageenan, and wherein the second biopolymer is gelatin; cooling the heated solution such that the temperature of the solution passes through the gelation temperature of the first biopolymer, but not the gelation temperature of the second biopolymer, to form a hydrogel co-gel in which the aroma is encapsulated; immersing the hydrogel co-gel in a composition comprising a metal cation before drying, wherein the cation is capable of forming a complex with the first biopolymer to induce gelation, and wherein the metal cation is potassium; and drying the hydrogel co-gel and forming into the food grade powder.

It has been surprisingly found by the inventors that when an aroma is encapsulated in a hydrogel comprising both a biopolymer capable of forming a thermoreversible elastic gel and biopolymer capable of forming a glassy matrix upon drying, the aroma is released slowly. For example, when an aroma is encapsulated in a hydrogel comprising both carrageenan and gelatin, the aroma is released more slowly than from a hydrogel based on gelatin alone. This finding was unexpected because combinations of biopolymers do not typically lead to good gels because the two polymers undergo phase separation. [Lundin, L.O., Odic, K. and Foster, T.J. (1999) Phase separation in mixed carrageenan systems. Proceedings to Supermolecular and Colloidal Structures in Biomaterials and Biosubstrates, Mysore, India.] The aroma was stable in the dried hydrogel before rehydration, with very little losses during storage or degradation due to oxidation, even for sensitive aromas such as 2-furfurylthiol.

### Brief Description of the Drawings

Figure 1 shows a schematic diagram of a process as described in Example 1 for forming a powdered co-gel hydrogel encapsulated aroma.
Figure 2 shows scanning electron micrographs comparing the dense powder structure achieved by the process described in Example 1 (2C) to the highly porous powder structure obtained by conventional spray drying (2A). 2B shows a co-gel without aroma.
Figure 3 shows the aroma concentration in ppm against time (h:m) measured by PTR-TOF-MS following adding water at 37 °C, 50 °C and 80 °C to a powdered co-gel hydrogel comprising aroma as described in Example 2.

### Detailed Description of the invention

Consequently the present invention relates to a method of making a food grade powder providing controlled release of aroma, the food grade powder comprising a dried hydrogel co-gel comprising a first biopolymer capable of forming a thermoreversible elastic gel upon cooling to 25 °C or above (for example between 25 °C and 90 °C, for example between 25 °C and 70 °C, for example between 25 °C and 55 °C, for further example between 25 °C and 40 °C), a second biopolymer capable of forming a glassy matrix upon drying, wherein the aroma is encapsulated in the hydrogel co-gel. Aroma molecules can be sensed by receptors in the nose."Food grade" is used in the context of the present invention to mean substances which can be eaten safely, for example by humans or pets. Whilst the current invention is not limited to substances permitted for consumption in any particular jurisdiction, edible compositions may for example comprise materials approved for human consumption by the U.S. Food and Drug Administration. The food grade powder may for example contain a maximum of 5.0 wt.% of glycerol.

A gel is a non-fluid network characterised by a continuous liquid throughout its whole volume. A gel may be defined by its rheology. For example at a frequency of 1 Hz, the measured linear shear elastic modulus G' of a gel may be greater than 10 Pa and the viscous modulus G" may be less than G'. An elastic gel has a G' greater than 1000 Pa. A hydrogel is a gel in which water is the dispersion medium, the gel comprising a network of polymer chains that are hydrophilic. A co-gel is a gel comprising at least two biopolymers which do not phase separate. The co-gel of the invention may be a semi-interpenetrating gel. Biopolymers are polymers produced by living organisms. Polysaccharides are examples of biopolymers. In the context of the present invention, the term "glassy" refers to materials which are non-crystalline amorphous solids.

The first biopolymer according to the method of the present invention is kappa carrageenan. Other suitable first biopolymers which are not forming part of the method of the present invention but are disclosed for illustration purposes may be selected from the group consisting of iota and lambda carrageenan, agar-agar, pectin, gellan gum and combinations of these.

The pectin may be high methoxy pectin or low methoxy pectin. The carrageenan may be any carrageenan from an algal or vegetable source. The carrageenan may be a carrageenan that gels in the presence of salt ions (e.g. potassium, calcium, magnesium, sodium). The carrageenan according to the method of the present invention is a carrageenan that gels in the presence of potassium, namely kappa carrageenan. The first biopolymer according to the method of the present invention is capable of forming a thermoreversible elastic gel upon cooling to between 25 °C and 70 °C from a temperature above 75 °C, for example it may be capable of forming a thermoreversible elastic gel upon cooling to between 25 °C and 40 °C from a temperature above 45 °C (for example above 50 °C). For example the first biopolymer according to the invention may capable of forming a thermoreversible elastic gel in solution at a total solids of less than 50 % upon cooling to between 25 °C and 70 °C from a temperature above 75 °C, for example it may be capable of forming a thermoreversible elastic gel in solution at a total solids of less than 50 % upon cooling to between 25 °C and 40 °C from a temperature above 45 °C (for example above 50 °C). The first biopolymer according to the invention may capable of forming a thermoreversible elastic gel in solution at a level of between 0.2 wt.% and 20 wt.% (for example between 0.5 wt.% and 5 wt.%) upon cooling to between 25 °C and 70 °C from a temperature above 75 °C, for example it may be capable of forming a thermoreversible elastic gel in solution at a level of between 0.2 wt.% and 20 wt.% (for example between 0.5 wt.% and 5 wt.%) upon cooling to between 25 °C and 40 °C from a temperature above 45 °C (for example above 50 °C).

The gelation temperature may be measured in a rheometer, applying cooling at a rate of between 0.5 and 5 °C per minute, for example about 1 °C per minute.

The second biopolymer according to the method of the present invention is gelatin. The gelatin may be from any source, for example the gelatin may be porcine gelatin, bovine gelatin or fish gelatin. The gelatin may have a bloom value between 40 and 450, for example between 50 and 300, for further example between 80 and 150. The gelatin may have a positive charge at pH values below 7.0, for example the gelatin may be porcine gelatin having a positive charge at pH values below 7.0. The gelatin may be selected from the group consisting of Type A porcine gelatin having a positive charge at a pH below 7.0, Type B bovine gelatin having a negative charge at a pH below 7.0, fish gelatin having a bloom value between 50 and 300 and combinations of these. Other suitable second biopolymers which are not forming part of the method of the present invention but are disclosed for illustration purposes may be selected from the group consisting of starch, hydrolysed starch and combinations of these. The starch may be modified starch. The second biopolymer may be a combination of starch and sugars, the sugars having a degree of polymerization of less than five. The second biopolymer may be a combination of hydrolysed starch (for example confectioner's syrup sometimes called glucose syrup) and sugars, the sugars having a degree of polymerization of less than five.

The food grade powder obtained by the method of the present invention comprises a dried hydrogel wherein the first biopolymer is kappa carrageenan and the second biopolymer is gelatin and wherein gelatin and kappa carrageenan may be the only biopolymers in the dried hydrogel co-gel.

The density of the food grade powder obtained by the method of the invention may be between 0.3 and 1.5 g/cm³, for example between 0.4 and 1.5 g/cm³, for example between 0.55 and 0.75 g/cm³, for example between 0.6 and 0.9 g/cm³, for further example between 1.2 and 1.4 g/cm³. In the context of the current invention, the term density refers to the density of the powder material itself; the mass of the powder particles divided by their volume, as opposed to bulk density where the volume includes inter-particle volume, for example when the powder is filled into a container.

The food grade powder obtained by the method of the invention may contain between 100 ppb and 50 wt.% of the aroma on a dry basis, for example between 0.01 and 25 wt.% on a dry basis, for further example between 0.1 and 15 wt.% on a dry basis. The aroma may be present in the food grade powder at a level of between 0.01 and 50 % of the total weight of the biopolymers comprised within the food grade powder on a dry basis. The aroma may be in aqueous solution or comprised within an oil-in-water emulsion. The creation of a co-gel according to the invention together with emulsion droplets provides a high encapsulation efficacy for aromas.

Also disclosed for illustration purposes but not forming part of the present invention is a food product comprising the food grade powder obtained by the method of the invention. The food grade powder loses very little aroma during storage, but on rehydration there is an initial rapid release of aroma, followed by a sustained release. This is ideal for use in beverages where a dried powder is added to water. The initial aroma release provides an appetizing anticipation to the consumer and the following sustained release provides a longer lasting above cup aroma adding to the enjoyment of the beverage. The food product may be a dried beverage, beverage flavouring powder, beverage creamer or flavoured dehydrated culinary product. The beverage may be selected from the group consisting of coffee (including coffee mix), tea, drinking chocolate, milk drink (including malted milk), infant formula, follow-on milk and nutritional formula (for example a maternal nutrition powder). The dried beverage may be reconstituted with water, milk or fruit juice. The beverage flavouring powder may be a milk flavouring powder, e.g. Nesquik^{®}. The flavoured dehydrated culinary product may be selected from the group consisting of soup, sauce, bouillon and noodle flavoring. The food grade powder obtained by the method of the invention provides rapid initial aroma impact followed by sustained release throughout the time taken for a typical beverage to be consumed. The aroma builds more slowly at cool temperatures such as 10 °C than at a temperature of 80 °C, but at all typical temperatures for beverage consumption the aroma release is sustained or continues to build over the usual consumption period (for example at least 10 minutes). The dried beverage may be a cold-soluble beverage, e.g. to be dissolved at a temperature between 10 °C and 25 °C. The food product may be to be contacted with water at a temperature above 50 °C before consumption, for example the dried beverage, beverage flavouring powder or beverage creamer may be to be contacted with water at a temperature above 50 °C before consumption.

For example, the food product is to be contacted with water at a temperature above 50 °C before consumption.

The food product comprising the food grade powder obtained by the method of the invention may be selected from the group consisting of a nutritional supplement, a breakfast cereal, an infant cereal, an instant soup powder, a concentrated bouillon (for example a bouillon tablet), an infant formula, a biscuit (for example a wafer), a confectionery product and pasta (for example noodles).

The method of the present invention provides a food grade powder, the food grade powder comprising a dried hydrogel co-gel comprising a first biopolymer capable of forming a thermoreversible elastic gel upon cooling to 25 °C or above, a second biopolymer capable of forming a glassy matrix upon drying, wherein an oil sensitive to oxidation (for example an oil high in polyunsaturated fats) is encapsulated in the hydrogel co-gel. For example between 0.05 and 500 mg/g of polyunsaturated fats on a dry weight basis may be encapsulated in the food grade powder, for example between 0.1 and 100 mg/g, for further example between 0.5 and 50 mg/g. The oil high in polyunsaturated fats may for example comprise eicosapentaenoic acid (EPA) or docosahexaenoic acid (DHA). Oils high in polyunsaturated fats, particularly EPA and DHA are beneficial for the development of infants and so may advantageously be added to powdered infant formulas, follow-on milks and maternal nutrition powders. Follow-on milks complement the weaning diet of an infant. Maternal nutrition powders are powders which may be administered to mothers during pregnancy and lactation. For example between 0.05 and 500 mg/g of eicosapentaenoic acid and/or docosahexaenoic may be encapsulated in the food grade powder on a dry weight basis, for example between 0.1 and 100 mg/g, for further example between 0.5 and 50 mg/g. In the context of the present invention, the term "fat" refers to materials primarily composed of triglycerides. Fats are the chief component of animal adipose tissue and many plant seeds. Fats which are generally encountered in their liquid form are commonly referred to as oils. In the present invention the terms oils and fats are interchangeable.

Also disclosed for illustration purposes but not forming part of the invention is a method of making a food grade powder, the method comprising; heating a solution comprising a first biopolymer capable of forming a thermoreversible elastic gel upon cooling to 25 °C or above (for example capable of forming a thermoreversible elastic gel in the solution upon cooling to 25 °C or above), a second biopolymer capable of forming a glassy matrix upon drying, and an oil-in-water emulsion; cooling the heated solution such that the temperature of the solution passes through the gelation temperature of the first biopolymer (for example the gelation temperature of the first biopolymer in the solution), but not the gelation temperature of the second biopolymer (for example the gelation temperature of the second biopolymer in the solution), to form a hydrogel co-gel in which oil is encapsulated; drying the hydrogel co-gel and forming into a powder. The oil may be comprise an aroma and/or an oil sensitive to oxidation. The dried hydrogel co-gel may be formed into a powder by any methods known in the art, for example the dried hydrogel co-gel may be milled.

The present invention provides a method of making a food grade powder providing controlled release of an aroma, the method comprising; heating a solution comprising a first biopolymer capable of forming a thermoreversible elastic gel upon cooling to 25 °C or above (for example capable of forming a thermoreversible elastic gel in the solution upon cooling to 25 °C or above), a second biopolymer capable of forming a glassy matrix upon drying, and the aroma, wherein the first biopolymer is kappa carrageenan, and wherein the second biopolymer is gelatin; cooling the heated solution such that the temperature of the solution passes through the gelation temperature of the first biopolymer (for example the gelation temperature of the first biopolymer in the solution), but not the gelation temperature of the second biopolymer (for example the gelation temperature of the second biopolymer in the solution), to form a hydrogel co-gel in which the aroma is encapsulated; immersing the hydrogel co-gel in a composition comprising a metal cation before drying, wherein the cation is capable of forming a complex with the first biopolymer to induce gelation, and wherein the metal cation is potassium; and drying the hydrogel and forming into the food grade powder. The dried hydrogel co-gel may be formed into a powder by any methods known in the art, for example the dried hydrogel co-gel may be milled. The gelation temperature may be measured in a rheometer, applying cooling at a rate of between 0.5 and 5 °C per minute, for example about 1 °C per minute. The solution according to the method of the invention may comprise between 0.2 wt.% and 20 wt.% (for example between 0.5 wt.% and 5 wt.%) of the first biopolymer and between 1 wt.% and 30 wt.% (for example between 5 wt.% and 15 wt.%) of the second biopolymer. The present inventors noted that the most common approach to drying in the food industry is spray drying but found that conventional spray drying of solutions comprising the first biopolymer, the second biopolymer and the aroma led to rapid release of aroma an due to a highly porous powder structure. Surprisingly, the present inventors found that when the solution was gelled before drying, release of aroma was considerably slower.

The release of the aroma is controlled by the speed of swelling/dissolution of the co-gel hydrogel powder. This can be controlled by formulation and processing modifications such as by altering polymer molecular weight and the powder particle size and shape.

Suitable first biopolymers which are not forming part of the method of the present invention but are disclosed for illustration purposes may be selected from the group consisting of iota and lambda carrageenan, agar-agar, pectin, gellan gum and combinations of these. The pectin may be high methoxy pectin or low methoxy pectin. The carrageenan may be any carrageenan from an algal or vegetable source. The carrageenan may be a carrageenan that gels in the present of salt ions (e.g. potassium, calcium, magnesium, sodium). In the method of the present invention, the first biopolymer is kappa carrageenan. The first biopolymer according to the method of the invention may capable of forming a thermoreversible elastic gel upon cooling to between 25 °C and 70 °C from a temperature above 75 °C, for example it may be capable of forming a thermoreversible elastic gel upon cooling to between 25 °C and 40°C from a temperature above 45 °C (for example above 50 °C). For example, the first biopolymer according to the method of the invention may capable of forming a thermoreversible elastic gel in a solution comprising more than 50 wt.% water (for example more than 80 wt.% water) upon cooling to between 25 °C and 70 °C from a temperature above 75 °C, for example it may be capable of forming a thermoreversible elastic gel in a solution comprising more than 50 wt.% water (for example more than 80 wt.% water) upon cooling to between 25 °C and 40 °C from a temperature above 45 °C (for example above 50 °C). The cooling rate under which the gelation temperature is to be measured may be between 0.5 and 5 °C per minute, for example about 1 °C per minute.

The second biopolymer according to the method of the invention is gelatin. The gelatin may be from any source, for example the gelatin may be porcine gelatin, bovine gelatin or fish gelatin. The gelatin may have a bloom value between 40 and 450, for example between 50 and 300, for further example between 80 and 150. The gelatin may have a positive charge at pH values below 7.0, for example the gelatin may be porcine gelatin having a positive charge at pH values below 7.0. The gelatin may be selected from the group consisting of Type A porcine gelatin having a positive charge at a pH below 7.0, Type B bovine gelatin having a negative charge at a pH below 7.0, fish gelatin having a bloom value between 50 and 300 and combinations of these. Other suitable second biopolymers which are not forming part of the method of the present invention but are disclosed for illustration purposes may be selected from the group consisting of starch, hydrolysed starch and combinations of these. The starch may be modified starch. The second biopolymer may be a combination of starch and sugars, the sugars having a degree of polymerization of less than five. The second biopolymer may be a combination of hydrolysed starch (for example confectioner's syrup sometimes called glucose syrup) and sugars, the sugars having a degree of polymerization of less than five.

In an embodiment of the method of the invention, the heated solution may comprise gelatin and kappa carrageenan wherein gelatin and kappa carrageenan are the only biopolymers in the solution.

The solution comprising the first biopolymer, the second biopolymer and the aroma may be heated to at least 100 °C before cooling to below 90 °C, for example the solution may be heated to at least 70 °C before cooling to below 60 °C, for further example the solution may be heated to at least 55 °C before cooling to below 30 °C. The solution may be heated to between 55 °C and 100 °C (for example between 55 °C and 70 °C) before cooling. It is advantageous that the method of the invention can be performed with a low maximum temperature to avoid loses or degradation of aroma. The method of the invention may comprise subjecting the solution to a holding tank having a temperature of at least 40 °C and then transferring the solution from the holding tank to another device which subjects the solution to the temperature of at least about 70 °C. The heated solution may be cooled in the method of the invention using a tubular heat exchanger. The heated solution may be cooled in the method of the invention to a temperature of between 1 °C to 30 °C, for example between 15 °C to 25 °C.

Also disclosed for illustration purposes but not forming part of the invention is a method of making a food grade powder providing controlled release of an aroma, which may be prepared by mixing an aroma emulsion with a solution comprising gelatin, carrageenan and salt (for example a potassium salt) in a holding tank that has a temperature of at least about 40 °C. Then the solution can be heated to a temperature of at least about 50-60 °C, for example in a funnel and/or a pump of a tubular heat exchanger. Then the tubular heat exchanger may cool the heated solution and extrude a hydrogel and/or hydrogel emulsion mixture in which the aroma molecule is encapsulated. For example, the tubular heat exchanger may have a temperature of about 15 °C to about 25 °C.

In an embodiment of the method of the invention the solution may be heated and mixed in an extruder. The solution may be cooled in the same extruder, for example an extruder with different temperature zones along its length. The solution may be heated and mixed in an extruder before being passed into a tubular heat exchanger for cooling. The tubular heat exchanger may be an extension of the extruder bore, for example the continuation of the bore of the extruder may be the central tube of a tube-in-tube heat exchanger. The cooled hydrogel co-gel may be cut into pieces at the exit of the extruder or the tubular heat exchanger, for example by a rotating blade positioned at the exit die of the extruder. The extruded hydrogel may be further cooled before drying, for example in a cooling tunnel. Drying may comprise subjecting the extruded hydrogel to a drying tunnel or fluid bed drier. In the context of the present invention, the term extruder refers to a machine which forces ingredients along a barrel and through a die. The ingredients may for example be forced along the extruder barrel by one or more revolving screws (e.g. single-screw extruders and twin-screw extruders). Extruders typically mix and heat the ingredient passed through them.

In one embodiment of the method of the invention the hydrogel co-gel may be dried in a fluid bed drier with an inlet air temperature of 20-25 °C at an air flow of 120 m³/minute for 30 to 60 minutes, then at about 40 °C at an air flow of about 120 m³/minute for an additional 60 to 90 minutes. For further example, the hydrogel co-gel may be dried in a drying tunnel with an inlet air temperature of 20-25°C at an air flow of 20-80 m³/minute for 30 to 60 minutes, then at about 40°C at an air flow of 20-120 m³/minute for an additional 60 to 90 minutes. Regardless of the drying technique applied, the resulting dry material may be collected and either used "as-is" or milled to further reduce the particle size to a desired size.

In the method of the invention the hydrogel co-gel is immersed in a composition comprising a metal cation before drying, for example a composition comprising a metal cation capable of forming a complex with the first biopolymer to induce gelation. In the method of the present invention, the metal cation is potassium. In an embodiment of the method of the invention the hydrogel co-gel may be immersed in a composition comprising potassium chloride before drying, for example the hydrogel co-gel may be immersed in a bath of between 1 and 100 mM potassium chloride before drying. Also disclosed for illustration purposes but not forming part of the invention is a method which may also be performed without a gelation bath, for example by including a metal cation in the solution comprising the first biopolymer capable of forming a thermoreversible elastic gel upon cooling to 25 °C or above and the second biopolymer capable of forming a glassy matrix upon drying. Performing the method without a gelation bath avoids the losses associated with such a bath, for example from washing and collecting the gelled particles.

Performing the invention with a gelation bath has the advantage of allowing a further strengthening of the co-gel. Also, immersing the hydrogel co-gel in a composition comprising a metal cation provides a convenient method to introduce cationic nutrient minerals to the food grade powder.

In an embodiment, the invention provides a method of making a food grade powder providing controlled release of an aroma, the method comprising; heating a solution comprising a first biopolymer capable of forming a thermoreversible elastic gel upon cooling to 25 °C or above (for example capable of forming a thermoreversible elastic gel in the solution upon cooling to 25 °C or above), a second biopolymer capable of forming a glassy matrix upon drying, and the aroma, wherein the first biopolymer is kappa carrageenan, and wherein the second biopolymer is gelatin; cooling the heated solution such that the temperature of the solution passes through the gelation temperature of the first biopolymer (for example the gelation temperature of the first biopolymer in the solution), but not the gelation temperature of the second biopolymer (for example the gelation temperature of the second biopolymer in the solution), to form a hydrogel co-gel in which the aroma is encapsulated; immersing the cooled solution in a composition comprising a metal cation to form a hydrogel co-gel in which the aroma is encapsulated, wherein the metal cation is potassium; drying the hydrogel co-gel and forming into a powder. Also disclosed for illustration purposes but not forming part of the present invention is a method of making a food grade powder providing delayed release of an aroma, the method comprises: heating a solution comprising a first biopolymer capable of forming a thermoreversible elastic gel upon cooling to 25 °C or above, a second biopolymer capable of forming a glassy matrix upon drying, and the aroma; forming droplets of the heated solution; gelling the droplets by subjecting the droplets to a gelling bath comprising salt or oil to form gelled beads in which the aroma is encapsulated; and drying the gelled beads to form the food grade powder. The dried gelled beads may be milled to a predetermined size. The droplets may be formed by passing the heated solution through a nozzle. The heating of the solution can comprise subjecting the solution to a temperature of about 60 °C. The gelling bath can comprise between 1 and 100 mM of potassium chloride. The drying may comprise subjecting the beads to fluid bed drying.

The methods of forming a food grade powder described above have the advantage of creating a dense glassy matrix that prevents the release of aroma.

### Examples

### Example 1 (not according to the present invention):

### Method for preparation of a composition

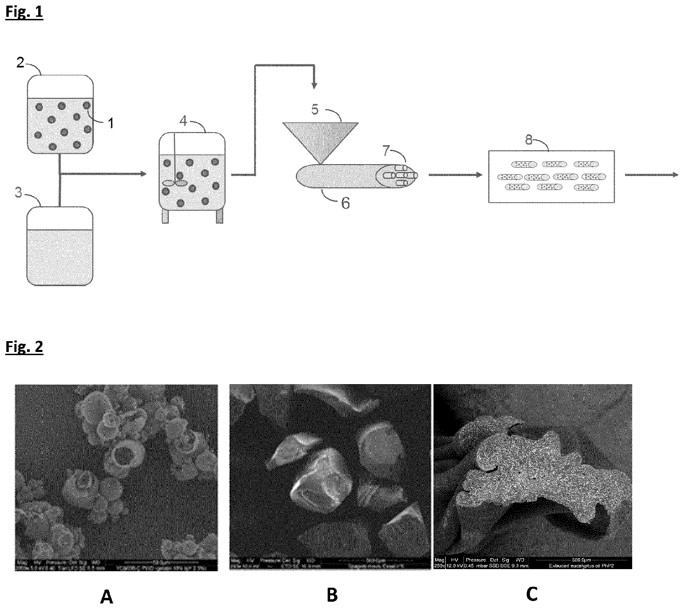

A powdered hydrogel co-gel encapsulated aroma is prepared using the process outlined in FIG 1. An aroma (1) emulsion is prepared by mixing 100 grams of eucalyptus oil with 100 grams of sunflower oil and creating a 40% oil-in-water emulsion (2) by mixing with a 2.5 wt% solution of whey protein isolate (Biopro 95). The solution is then homogenised using a rotor stator homogeniser (polytron PT 2100) at 18,000 rpm for 5 minutes. The aroma emulsion is mixed with a solution (3) comprising 10 wt% gelatin (porcine, 100 Bloom Gelita Deutschland GmbH), 1 wt% k-carrageenan (WR-78 CPKelco, Cebu Phillapines) and 50 mM potassium salt (99% purity, Sigma Aldrich GmbH) in a holding tank (4) at about 40 °C. The solution is then heated to a temperature of about 55 °C, being passed via a heated funnel and pump (5) into a tubular heat exchanger (6) having a temperature of about 20 °C. The tubular heat exchanger cools the heated solution, forming a co-gel hydrogel in which the aroma is encapsulated. A solution of 10 wt% of the same gelatin was found to have a gelation temperature of 16.7 °C when cooled at 1 °C per minute.

At the exit of the heat exchanger the co-gel hydrogel is extruded through a die plate to form strands (7). A rotating cutter at the die plate cuts the strands into small pieces. The co-gel hydrogel is then dried in a fluid bed drier (8) with an inlet air temperature of 20-25 °C at an air flow of 120 m3/minute for 45 minutes, then at about 40 °C for an additional 75 minutes. The resulting dry material is collected and ground to form a powder. A sample of the cut co-gel hydrogel is examined by scanning electron microscopy (SEM) (Figure 2C) and compared with a co-gel hydrogel made in the same manner but without the addition of aroma emulsion (Figure 2B) and a spray dried powder with the same feed liquid composition [10 wt% pork gelatin (100 bloom) - Gelita, 1 wt% k-carrageenan (WR-78 - CPKelco and 50 mM potassium chloride] as Figure 2B (Figure 2A) can be seen that the co-gel hydrogels gelled before drying have a much denser structure than the porous open structure of the spray dried material.

### Example 2 (not according to the present invention): Aroma release

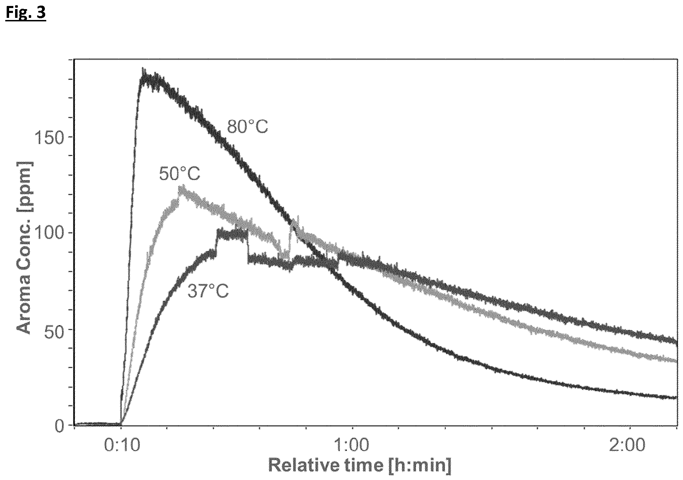

The release of aroma from the co-gel hydrogel aroma powder is assessed using a PTR-TOF-MS instrumental method. Briefly, the co-gel hydrogel aroma powder from Example 1 is placed in the bottom of a double jacket glass cell equipped with a flat glass connector and connected to a circulating water bath to control the temperature inside the cell. The cap made of stainless steel (equipped with ports (to allow air and water connections) is placed on top to seal the vessel. Volatile aroma concentration was monitored on-line in real time by the PTR-TOF-MS (lonicon Analytik Ges.m.b.H. , Austria) immediately upon sealing of the vessel, and for 10 minutes after (Figure 3). It is apparent that during the first 10 minutes no aroma (ie. < 1 ppm concentration in the gas phase) is released from the encapsulated aroma powder. Upon addition of water (at i) 80°C, ii) 50°C or iii) 37°C) there is an immediate release of aroma, the speed and intensity of which is proportional to the temperature of the water (Figure 3). Figure 3 also demonstrates that there is consistent release of aroma after the addition of water, demonstrating sustained above cup aroma. When 80°C water is added to the aroma powder the time of sustained aroma release (above 50 ppm concentration in the gas phase) is one hour and ~ 4 minutes. When 50°C water is added to the aroma the time of sustained aroma release (above 50 ppm) is one hour and ~ 25 minutes. When 37°C water is added to the aroma the time of sustained aroma release (above 50 ppm) is one hour and ~ 45 minutes.

Figure 3 also demonstrates that the speed of release and maximum peak in aroma concentration is proportional to the temperature of the water. Without wishing to be bound by theory, this behavior is believed to be related to the speed of swelling/dissolution of the hydrogel co-gel powder.

### Example 3 (not according to the present invention): Coffee Beverage

A dehydrated coffee mix was prepared by dry mixing a powdered co-gel with powdered coffee and milk/sugar base to create a 3 in 1 dehydrated coffee mix, the composition of the milk sugar base containing the encapsulated co-gel aroma is given in Table 1. After dry blending, the resulting mixed powder was portioned and packaged. Upon reconstitution (via addition of warm to hot water 50 to 80°C) there is an immediate and sustained release of aroma from the powder that contributes to a pleasant appeal of an instant hot beverage. This demonstrates that a dense aroma encapsulation system is advantageous for an instant hot beverage product such as a coffee, hot chocolate or hot malted beverage.

**Table 1: Composition of powdered coffee beverage.**

| **Coffee Creamer** | **mass (g/100g)** |
|---|---|
| Stabilizing & buffer salts | 2.5 |
| Sodium chloride | 0.2 |
| Sodium caseinate | 2.4 |
| Water | 3 |
| Glucose syrup | 57.5 |
| Palm oil | 33.9 |
| Low Molecular Weight Emulsifier | 0.5 |
| Aroma Encapsulated in Co-Gel | 0.1 to 10 |

### Example 4 (not according to the present invention): Food product

A dehydrated flavour sachet was prepared by dry mixing a powdered co-gel with powdered culinary base and/or thickening agents (e.g. starch, flour and/or hydrocolloids) to create a dehydrated culinary base (soup, sauce, bullion, noodle flavoring), the composition of such a product is given in Table 2. After dry blending, the resulting mixed powder was portioned and packaged. Upon reconstitution (via addition of warm to hot water 50 to 80°C) there is an immediate and sustained release of aroma from the powder that contributes to a pleasant eating experience. Such an immediate and sustained release of aroma is advantageous during the preparation of a flavored culinary products, for example dehydrated products such as a creamy soups, instant noodles and sauce bases.

**Table 2: Composition of powdered soup**

| **Powdered Soup** | | **mass (g)** |
|---|---|---|
| Flavoured powder Mix | | 12.5 |
| salt | | 3.9 |
| Creamer | | 10.7 |
| | High Oleic sunflower oil | |
| | Lactose | |
| | NaCaseinate | |
| Wheat flour | | 14.0 |
| Corn starch | | 11 |
| Modified starch | | 1.0 |
| Palm oil | | 2.0 |
| Aroma Encapsulated in Co-Gel | | 0.1 to 10 |

### Example 5 (not according to the present invention):

### Infant feeding formula, follow on milk or material supplement comprising oxygen-sensitive oils.

A powdered hydrogel co-gel was formed as in Example 1 except that the oil phase contained EPA and DHA essential fatty acids in the form of a high DHA algal oil and fish oil. A follow-on milk was created by dry blending the powdered hydrogel co-gel containing EPA and DHA essential fatty acids, with a follow-on milk composition. An example composition is given in table 3. After dry blending, the resulting mixed powder was portioned and packaged. The powdered hydrogel co-gel may contain an aroma, for example a nature-identical strawberry aroma. In addition to providing release of pleasant aromas in flavoured follow-on milks and maternal nutrition powders the dense hydrogel co-gel powder can control the access of gasses to materials encapsulated within the powder preventing their oxidation. Food oils sensitive to oxidation (e.g. those containing polyunsaturated fatty acids) can therefore be protected by the powdered hydrogel co-gel. Similar compositions may be prepared as powdered infant formulas or maternal nutrition powders.

**Table 3: Composition of follow-on milk**

| Nutrient | Per 100 kcal | Per litre |
|---|---|---|
| Energy (kcal) | 100 | 670 |
| Protein (g) | 1.83 | 12.3 |
| Fat (g) | 5.3 | 35.7 |
| linoleic acid (g) | 0.79 | 5.3 |
| α-Linoleic acid (mg) | 101 | 675 |
| Eicosapentaenoic acid - EPA (mg) | ≥150 | ≥1000 |
| Docosahexaenoic acid - DHA (mg) | ≥450 | ≥3000 |
| Lactose (g) | 11.2 | 74.7 |
| Minerals (g) | 0.37 | 2.5 |
| Na (mg) | 23 | 150 |
| K (mg) | 89 | 590 |
| Cl (mg) | 64 | 430 |
| Ca (mg) | 62 | 410 |
| P (mg) | 31 | 210 |
| Mg (mg) | 7 | 50 |
| Mn (µg) | 8 | 50 |
| Se (µg) | 2 | 13 |
| Vitamin A (µg RE) | 105 | 700 |
| Vitamin D (µg) | 1.5 | 10 |
| Vitamin E (µg TE) | 0.8 | 5.4 |
| Vitamin K1 (µg) | 8 | 54 |
| Vitamin C (mg) | 10 | 67 |
| Vitamin B1 (mg) | 0.07 | 0.47 |
| Vitamin B2 (mg) | 0.15 | 1 |
| Niacin (mg) | 1 | 6.7 |
| Vitamin B6 (mg) | 0.075 | 0.5 |
| Folic Acid (µg) | 9 | 60 |
| Pantothenic acid (mg) | 0.45 | 3 |
| Vitamin B12 (µg) | 0.3 | 2 |
| Biotin (µg) | 2.2 | 15 |
| Choline (mg) | 10 | 6.7 |
| Fe (mg) | 1.2 | 8 |
| I (µg) | 15 | 100 |
| Cu (mg) | 0.06 | 0.4 |
| Zn (mg) | 0.75 | 3 |

## Claims

1. Method of making a food grade powder providing controlled release of an aroma, the method comprising;
heating a solution comprising a first biopolymer capable of forming a thermoreversible elastic gel upon cooling to 25 °C or above, a second biopolymer capable of forming a glassy matrix upon drying, and the aroma, wherein the first biopolymer is kappa carrageenan, and wherein the second biopolymer is gelatin;
cooling the heated solution such that the temperature of the solution passes through the gelation temperature of the first biopolymer, but not the gelation temperature of the second biopolymer, to form a hydrogel co-gel in which the aroma is encapsulated;
immersing the hydrogel co-gel in a composition comprising a metal cation before drying, wherein the cation is capable of forming a complex with the first biopolymer to induce gelation, and wherein the metal cation is potassium; and
drying the hydrogel co-gel and forming into the food grade powder.

2. A method according to claim 1 wherein the solution is heated to at least 100 °C before cooling to below 90 °C.

3. A method according to claims 1 or 2 wherein the solution is heated and mixed in an extruder before being passed into a tubular heat exchanger for cooling.

## Patentansprüche

1. Verfahren zum Herstellen eines Pulvers in Lebensmittelqualität, das eine kontrollierte Freisetzung eines Aromas bereitstellt, das Verfahren umfassend;
Erhitzen einer Lösung, umfassend ein erstes Biopolymer, das in der Lage ist, bei einem Abkühlen auf 25 °C oder höher ein thermoreversibles elastisches Gel auszubilden, ein zweites Biopolymer, das in der Lage ist, bei einem Trocknen eine glasartige Matrix auszubilden, und das Aroma, wobei das erste Biopolymer Kappa-Carrageenan ist, und wobei das zweite Biopolymer Gelatine ist;
Abkühlen der erhitzten Lösung derart, dass die Temperatur der Lösung durch die Geliertemperatur des ersten Biopolymers, aber nicht die Geliertemperatur des zweiten Biopolymers verläuft, um ein Hydrogel-Co-Gel auszubilden, in dem das Aroma eingekapselt ist;
Eintauchen des Hydrogel-Co-Gels in eine Zusammensetzung, umfassend ein Metallkation vor dem Trocknen, wobei das Kation in der Lage ist, einen Komplex mit dem ersten Biopolymer auszubilden, um eine Gelierung zu induzieren, und wobei das Metallkation Kalium ist; und
Trocknen des Hydrogel-Co-Gels und Ausbilden in das Pulver in Lebensmittelqualität.

2. Verfahren nach Anspruch 1, wobei die Lösung vor dem Abkühlen auf unter 90 °C auf mindestens 100 °C erhitzt wird.

3. Verfahren nach Anspruch 1 oder 2, wobei die Lösung erhitzt und in einem Extruder gemischt wird, bevor sie in einen rohrförmigen Wärmetauscher zum Abkühlen geleitet wird.

## Revendications

1. Procédé de fabrication d'une poudre de qualité alimentaire fournissant une libération contrôlée d'un arôme, comprenant ;
le chauffage d'une solution comprenant un premier biopolymère capable de former un gel élastique thermoréversible lors d'un refroidissement à 25 °C ou plus, un second biopolymère capable de former une matrice vitreuse au séchage, et l'arôme, le premier biopolymère étant du kappa-carraghénane, et le second biopolymère étant de la gélatine ;
le refroidissement de la solution chauffée de telle sorte que la température de la solution passe par la température de gélification du premier biopolymère, mais pas la température de gélification du second biopolymère, pour former un co-gel d'hydrogel dans lequel l'arôme est encapsulé ;
l'immersion du co-gel d'hydrogel dans une composition comprenant un cation métallique avant séchage, le cation étant capable de former un complexe avec le premier biopolymère pour induire une gélification, et le cation métallique étant potassium ; et
le séchage du co-gel d'hydrogel et la mise en forme en la poudre de qualité alimentaire.

2. Procédé selon la revendication 1, dans lequel la solution est chauffée à au moins 100 °C avant refroidissement à moins de 90 °C.

3. Procédé selon les revendications 1 ou 2 dans lequel la solution est chauffée et mélangée dans une extrudeuse avant d'être passée dans un échangeur thermique tubulaire pour refroidissement.
